(19) Europäisches Patentamt / European Patent Office / Office européen des brevets

(11) **EP 3 050 941 B1**

(12) **EUROPEAN PATENT SPECIFICATION**

(45) Date of publication and mention
of the grant of the patent:
**11.10.2017 Bulletin 2017/41**

(21) Application number: **14786221.3**

(22) Date of filing: **22.09.2014**

(51) Int Cl.:
***C10J 3/48*** *(2006.01)*

(86) International application number:
**PCT/ES2014/070717**

(87) International publication number:
**WO 2015/040266 (26.03.2015 Gazette 2015/12)**

(54) **PROCESS AND REACTOR FOR GASIFICATION OR ORGANIC SOLID MATERIALS**

VERFAHREN UND REAKTOR FÜR VERGASUNG VON ORGANISCHEN MATERIALEN

PROCÉDÉ ET APPAREIL POUR LA GAZÉIFICATION DES MATERIAUX ORGANIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.09.2013 ES 201331380**

(43) Date of publication of application:
**03.08.2016 Bulletin 2016/31**

(73) Proprietor: **Eqtec Iberia, S.L.
08150 Parets del Valles (Barcelona) (ES)**

(72) Inventor: **ALEMÁN MÉNDEZ, Yoel Santiago
E-08150 Parets del Valles (Barcelona) (ES)**

(74) Representative: **Isern-Jara, Nuria
J. Isern Patentes y Marcas
Avda. Diagonal 463 Bis 2°
08036 Barcelona (ES)**

(56) References cited:
**EP-A1- 1 136 542       EP-A2- 0 102 828
US-A1- 2010 040 510       US-A1- 2013 161 563**

**Description**

## OBJECT OF THE INVENTION

The present invention relates to a process for gasifying organic solid materials in a fluidised bed reactor with a cylindrical body and a base with an inverted frustoconical section, by means of a gas flow that entrains the solid particles and which comprises the following steps:

> a.-) supplying fuel through at least one inlet for feeding organic solid,
> b.-) providing a catalytic agent or mixture thereof with inert material through an inlet arranged at 60° from the inlet for feeding the organic solid from step a),
> c.-) introducing a fluidising agent through an inlet located in the air box or plenum
> d.-) distributing the fluidising agent through the lower base of the inverted frustoconical section, wherein there is a distributor grid provided with a plurality of outlet holes or tuyere-type diffusers, and
> e.-) producing the outflow of the product stream through the top of the reactor transverse to the cylindrical section thereof by means of an outlet element.

Additionally, the invention relates to a gasification reactor or apparatus for implementing the aforementioned process.

## BACKGROUND OF THE INVENTION

Gasification is a thermochemical process in which a carbonaceous substrate (organic) is transformed into a combustible gas of low to medium heating value, by means of a series of reactions that occur at a certain temperature in the presence of a gasifying agent (air, oxygen and/or steam or mixture of any of the above).

When the gasification is integrated into a combined cycle, the solid residue is transformed into combustible gases of low to medium heating value which are subsequently burned in an internal combustion engine, steam generator or gas turbine in order to generate energy.

It is scientifically proven that the energy efficiency of the combustion of gases may be around 10-15% higher than in the combustion of a solid. On the other hand, from an environmental viewpoint, gasification is also a cleaner technology, because when carried out in less oxidative conditions, the production of pollutants such as NOx and SOx is lower.

The process of gasification of solids, for example solid waste such as biomass, is known in the state of the art. The two types of reactors that are often used in the process of gasification of solid wastes are essentially the moving bed (countercurrent and co-current) and the fluidised bed or fluid bed.

Each has a number of advantages and disadvantages, for example the fluidised bed gasifier easily allows the scaling of the process, and it has a higher capacity for processing and a better control of the process temperature than the moving bed gasifier. Another very important advantage presented by the fluidised bed compared with the moving bed is that it allows for the addition of catalysts in the bed in order to carry out catalytic gasification.

However, the fluidised bed also has a number of disadvantages, for example, a specific grain size of the solid material to be gasified is required, namely, generally a preparation (crushing and/or pelletised) upon the solid material to be fed is required, as in order to obtain good fluidisation, the particle size should be as homogeneous as possible.

On the other hand, not all solid materials are easily fluidised; on occasion, it is necessary to add another solid which supports fluidisation. Finally, another drawback may be the loss of fluidisation due to agglomeration and sintering of the bed, as determined by the thermoplastic properties of the material and by the melting temperature of the ashes.

Additionally, there are two main types of fluidised bed reactors in the state of the art, one of which is based primarily on a bubbling fluidised bed. The bubbling fluidised bed consisting of fluidised particles divided relatively thickly remains in position held by an upward flow of air blown into the reactor space. The air flow rate is usually of the order of 1 m/s. The solid matter concentration is low in the gas flow above a clearly limited bubbling fluidised bed. The temperature of the reactor space above the fluidised bed in a bubbling bed reactor can be raised by additional air supply or reduced by injecting cooling water into the gas flow. To increase charcoal conversion, the dust particles present in the gas flow can be separated with a different cyclone, in which the particles are returned to the bottom of the reactor space. "Winkler gasifiers" of this type are described in documents DE19548324 and DE2751911.

The second main type of fluidised bed reactors is a circulating bed, in which solid fluidised particles are raised together with the air flow blown into the reactor. The air flow rate, which is typically on the order of 5 m/s, is greater and the size of the fluidised particles is smaller than in a bubbling bed reactor. The fluidised particles are entrained by the product gas into the cyclone, wherein the particles and the carbonisation residue derived from the fuel are separated and returned to the bottom of the reactor space. To obtain the retention time required for the gasification reaction, a substantially greater height than that of bubbling fluidised bed reactors has been given to the circulating fluidised bed reactors. Other properties typical of circulating fluidised beds comprise uniform temperature and relatively uniform viscosity of the suspension of solid matter in the reactor space, without a clearly limited fluidised bed characteristic of bubbling fluidised beds. A typical fuel gasification process based on circulating fluidised bed reactors is disclosed in document FI62554.

That which is disclosed in patent EP0889943, which relates to a system of fluidised bed reactor and a process for operating said system, is comprised in the state of the art. Said system comprises: a fluidised bed reactor chamber, a particle separator connected to said chamber (to separate the solid material from the exhaust gases) and a gas cooler that has cooling surfaces connected to the particle separator. According to this invention, means are provided for separating a flow of solid bed material from the material separated in the particle separator and for introducing said separated bed material into the gas cooler. A flow of bed material is separated from the main flow of solid particles, before or after discharging said first flow of solid particles from the particle separator. The flow of separated particles is introduced into the gas discharged from the separator during or before cooling said gas such that said particles mechanically dislodge the deposits from the cooled surfaces.

Another patented system is protected in the patent EP1286113, which relates to an apparatus for processing combustible material, comprising: a gasification furnace having a fluidised bed which has a means for supplying gas to supply said gasification furnace and for creating a stream of circulation of a fluidised means within said furnace; means for supplying said combustible material in said fluidised bed gasification furnace for being gasified in said flow stream of said fluidised medium created by said fluidising gas, thereby generating combustible gas and charcoal; and a melting furnace in which said combustible gas and charcoal discharged are introduced from said fluidised bed gasification furnace and for melting ash to form molten slag.

A third patent document in the state of the art is invention EP0433547, which relates to an apparatus for gasifying solid fuel, which consists of a gas producer with a pre-loading silo, a carbonisation or coking silo and a gasification silo and a furnace which is particularly suitable for gasifying low-cost products such as wood waste and chips, solid biomasses in general, tyres, peat, lignite, bituminous coal and other materials, and advantageously, solid urban waste.

Another document in the state of the art is European Patent EP1432779, which relates to a process for gasifying a fuel in an ascending gas flow in a fluidised bed reactor containing solid fluidised material particles, comprising the supply of fuel, in the bottom of the reactor and feeding the product gas formed in the top of the reactor to a separator, whereby the solid particles are separated from the gas and returned to the reactor, characterised by the fact that the gas flow is used to maintain a bubbling fluidised bed in the reactor which contains particles of coarser fluidised material having a size in the range of 0.2 to 1.5 mm and above this a circulating bed containing particles of more finely divided fluidised material having a size in the range of 50 to 300 $\mu$m, and because the particles that have separated from the product gas for circulation are returned to the top of the bubbling fluidised bed of the reactor or above this.

However, these documents of the state of the art have the disadvantage of the complexity of the reactors and that they mainly produce a high quantity of unburnt products and solid carbonaceous residue (char) that are entrained from the bed before they degrade completely, thereby decreasing the carbon conversion to gas, which generally occurs inside the gasifiers with cylindrical geometry, where the retention or residence time of the solid inside the bed of inert particles is not sufficient for achieving such degradation and much depends on the operating conditions, such as the fluidising speed, the bed height, the thermal load of the reactor, the processing capacity of solid fuels, including other factors.

US2010/0040510 A1 mentions a gasification process and reactor, the reactor having a frustoconical section. This effect can be minimised for the purpose of the present invention, since the retention time of the organic solid fuel inside the bed has been increased by recirculating systematically. Additionally, a distinct advantage of the present invention is that as greater retention time is provided, and therefore degradation of carbonaceous solids in the bed, a more homogeneous mixture of inert material of the solid/bed carbonaceous/catalyst also occurs, therefore a high rate of conversion to gas is obtained and the amount of carbonaceous material entrained in the gas stream is minimised.

## DESCRIPTION OF THE INVENTION

The present invention relates to a fluidised bed gasification reactor in which a mixture of inert particles, a catalyst and an organic solid (*raw material to be gasified*) are involved, the latter, as a result of the temperature in the presence of a catalyst and upon reacting with a gasifying agent (air, oxygen, steam or a mixture of these components), decomposes to yield a gas mixture of medium/low calorific value, tars and carbonaceous solid particles.

The product stream (mixture of gases, vapours and solid particles entrained from the bed) is evacuated through the top of the reactor having remained for some time on the inside, and the slag (agglomerates) formed are extracted continuously via mechanical means through the bottom of the reactor.

The reactor according to the present invention operates by fluidising a particle bed of inert material through a stream of a fluidising agent (air, oxygen, steam or a mixture of these components) which is introduced via a distributor grid located on the lower base of the inverted frustoconical section of the reactor, provided with a plurality of outlet openings or tuyere-type diffusers (or nozzle).

The organic solid material, commonly called solid fuel, is fed inside the bed through one or more inlets, preferably two, where as a result of the temperature and the chemical reactions that occur in the presence of the catalyst, is decomposed resulting in a product stream comprising: a mixture of gases, condensable hydrocarbons (tar), solid carbonaceous residue (char), particles of inert material that make up the bed and catalyst particles which are entrained towards the outside. This product stream is discharged from the upper side part of the gasifier, transverse to the cylindrical section of the reactor.

These types of reactors, namely bubbling fluidised bed reactors, are widely used because of the versatility regarding diversity solid fuels to be gasified, because it achieves better mixing between inert material and the fuel, due to its high heat transfer rate and for achieving high heating speeds, including other advantages. However, it is true that a lot of unburned combustion residue or carbonaceous solid waste (char) is usually produced that is entrained from the bed before degrading completely, thereby reducing the rate of carbon conversion to gas.

This phenomenon generally occurs with solids inside the gasifiers with constant geometry (cylindrical/square or rectangular), where the retention time or permanence of said solid inside the bed of inert particles is not sufficient to achieve degradation, which, in turn, depends on the operating conditions, among which the fluidisation speed, the bed height, the heat load of the reactor, the processing capacity of the solid fuels are found, including others. On decomposing and having different particle size and density, the solids are entrained with the gas stream that ascends towards the outlet because the flow pattern is predominantly upward.

This effect can be minimized by modifying the flow pattern at the base of the gasifier to promote the particles of solid fuel, immediately after entering the reactor, from making a strong downward path, thereby achieving a longer retention time of the organic solid inside the bed via increased circulation therein, this time being distributed as follows:

- Time elapsed from when the organic solid enters until it reaches the bottom of the fluid bed,

- Time elapsed from when the organic solid covers the distance from the bottom to the top of the bed and

- Time in which the organic solid is degraded in order to be entrained in the form of ash at the outlet for product stream or gases.

In this manner, it is not necessary to resort to very high beds that causes increases in the bubble sizes that produce "slugging" phenomena (process produced by increasing gas flow in a fluidised bed, wherein bubbles grow with height and coalesce forming bed "floors" along the reaction zone), therefore, the heat transfer and the conversion of carbon is diminished.

## BRIEF DESCRIPTION OF THE FIGURES

As a complement of the description being made and for a better understanding of the characteristics of the invention, according to an example of a practical preferred embodiment thereof, attached as an integral part of the aforementioned description are the following figures where, for purposes of illustration and in a non-limiting manner, the following is shown:

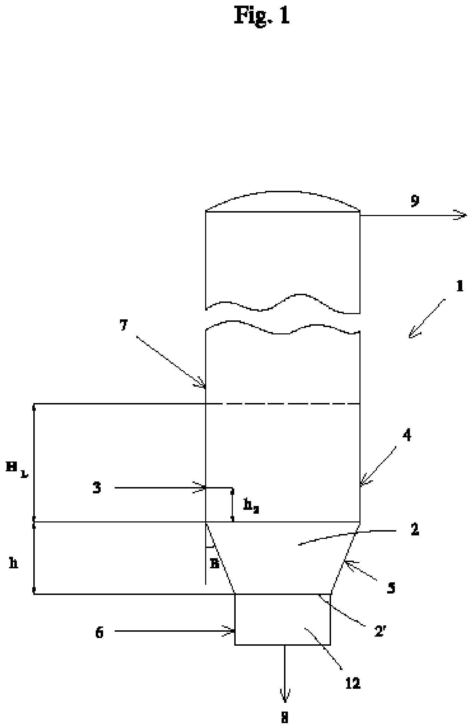

Figure 1 is a front view of the gasification reactor according to the present invention wherein:

(1) It schematically represents the cylindrical body of the reactor,
(2) It represents the bottom of the reactor which comprises an inverted frustoconical section and a lower base (2'),
(3) It schematically represents the inlet for the organic solid,
(4) It schematically represents the inlet for recirculating entrained solids from the bed,
(5) It schematically represents the inlet for the inerting product,
(6) It schematically represents the inlet for the fluidising agent, located in the air box or plenum (12)
(7) It schematically represents the inlet for the catalyst and the inert material,
(8) It schematically represents the outlet for agglomerates, and
(9) It schematically represents the outlet for the product stream.
(HL) Represents the effective bed height
(B) Represents the inclined angle $\beta$ of the frustoconical section.
($h_2$) Represents the height of the inlet (3) for feeding organic solid.
(h) Represents the height of the frustoconical section.

Figure 2 is a bottom view of the gasification reactor (1) object of the present invention, showing the inverted frustoconical bottom (2) and the lower base (2') of the inverted frustoconical section.

Figure 3 shows a diagram illustrating the flow pattern of solids that represents the fluid dynamics of the particles in the fluidised bed reactor (1) having an inverted frustoconical bottom (2), with a tuyere-type distributor plate (10), according to the process object of the present invention.

## DETAILED DESCRIPTION OF THE INVENTION

The present invention relates to a process for gasifying organic solid materials in a fluidised bed reactor (1) having a cylindrical body and a base (2) with an inverted frustoconical section, by means of a gas flow that entrains the solid particles which comprises the steps laid out in claim 1. Additionally, the invention also relates to an apparatus consisting of a gasification reactor (1) for implementing the process described above.

Specifically, the gasification reactor (1) according to the present invention is characterised in that it is formed by an outer envelope having a cylindrical external configuration, connected at its bottom to an inverted truncated cone, the upper part being the larger diameter of the truncated cone, equal to the diameter of the cylinder ($D_{cylinder}$). The reactor (1) according to the present invention is a fluidised bed reactor which is cylindrical in shape having a bottom (2) with an inverted frustoconical section, with a distributor grid (10) located in the lower base (2') of the inverted frustoconical section and provided with a plurality of tuyere-type diffusers (11).

Said distributor grid (10) does not alter the specific surface heat load ($kW/m^2$), said heat load being designed for a gasification reactor having a continuous section ($D_{cylinder}$) and equal surface speed. The reactor (1) object of the present invention therefore fulfils the following ratio:

$$D_{cylinder}/D_{base}=1+tangent\ \beta$$

$\beta$ being the angle that the generatrix of the frustoconical section forms with the generatrix of the cylindrical section.

Based on the inventive effort, the inventor has determined that the claimed geometry improves the circulation pattern of solids inside a gasifier with this configuration, thereby increasing the retention time of the solid in the interior thereof. In other words, when the particles of organic solid enter the reactor (1) a downward path can be described as they are entrained by the bed material towards the area of the truncated cone and are incorporated into the bed stream from the intake area of the fluidising agent, thereby providing a greater circuit and increased reaction time, than if it were done from the middle of the bed.

Figure 1 is a front view of the gasification reactor object of the present invention wherein (1) schematically represents the cylindrical body of the reactor, (2) represents the inverted frustoconical bottom comprising a section or lower part of the trunk of the cone and a lower base (2'), (3) schematically represents the inlet of the organic solid, which in a preferred embodiment may be at least two inlets, (4) schematically represents the inlet for recirculating solids entrained from the bed, (5) schematically represents the inlet for the inerting product, which in a preferred embodiment may be two inlets, and in a more preferred embodiment may be four inlets. The inerting product may be selected from nitrogen or water. (6) schematically represents the inlet for the fluidising agent located in the air box or plenum (12). (7) schematically represents the inlet of the catalyst or a mixture of this with the inert material, such that it is possible to replenish the consumable substances to the process, such as the catalyst and the inert material that forms the bed. (8) schematically represents the agglomerates or slag produced during the process, and (9) schematically represents the outlet for the product stream, which comprises a mixture of gases, vapours and solid particles entrained from the bed.

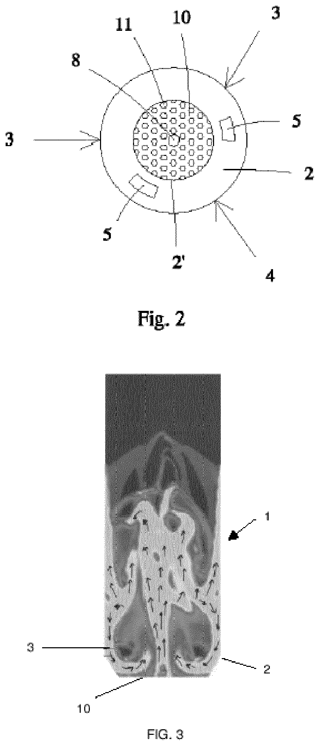

Figure 2 is a bottom view of the gasification reactor (1) according to the present invention, showing the bottom (2) of the inverted truncated cone and the lower base (2') of said truncated cone. The distributor grid (10) is on said lower base (2') provided with a plurality of tuyere-type diffusers (11), through which the gasifying agent is introduced into the bed. Said gasifying agent can be selected from air, oxygen, steam or a mixture of the above elements. Additionally, two inlets (3) for feeding organic solid is shown, located 120° between each other, two inlets (5) for the inerting product, an inlet (4) for recirculating products entrained from the bed and the outlet for agglomerates (8).

Figure 3 shows the diagram illustrating the flow pattern of solids that represents the fluid dynamics of the particles in the fluidised bed reactor (1) having an inverted frustoconical bottom (2), with an inlet (3) for feeding organic solid and a distributor grid (10), according to the process object of the present invention.

According to the location of the distributor grid (10) and its tuyere-type diffusers (11), a strong ascending current is generated in the central zone of the bed, proportional to the diameter of the lower base (2') where said distributor grid is located (10), and a low speed of the bed in the zone near to the reactor walls with lateral currents of the material of the fluidised bed, such as for example, sand particles, that describe a return to the bottom of the bed through the sides, entraining organic solid particles (biomass, for example) that enter the gasification reactor (1) through the inlet (3), and experience a pronounced downward movement, the height ($h_2$) of said inlet (3) being located at a height from the largest base of the cone ($D_{base}$) equal in meters to the sine of angle $\beta$ of the inverted frustoconical section.

It is therefore seen that with this entrainment of organic solid particles towards the bottom of the bed, residence time of the solid fuel is increased inside the reactor, the organic solid particles having a greater path within the bed, there being increased reaction time and therefore efficiency of the process.

According to another characteristic of the reactor (1), there are no inlets for feeding solids in the frustoconical section and instead there are one or more inlets (5), preferably four, through which steam or nitrogen for inerting is conveniently introduced to facilitate gasification conditions or to control the temperature of the process that takes place, as appropriate. According to another characteristic of the reactor (1), there is at least one inlet (3) for feeding the solid organic fuel transversely to the cylinder section. In a preferred embodiment, there may be at least two solid fuel inlets arranged at 120° from each other and another inlet (4) forming an acute angle with the generatrix of the cylindrical body of the reactor, arranged at 60° from each of the feed inlets, when there are at least two. The solids entrained from the bed are recirculated through said inlet (4). This arrangement of inlets (3) and (4) achieves a homogeneous mixture inside the bed and causes the forces on the walls of the gasification reactor which generate vibrations to be offset.

According to another characteristic of the reactor (1), this comprises an inlet (7) located at a greater or equal height to the effective bed height (HL) and which is intended for introducing a catalytic agent or mixture of this with inert material comprising the fluid bed, in order to keep the height and bed conditions constant.

In a preferred embodiment, the volume occupied by the frustoconical section with respect to the total volume of the particle bed is equal in percentage to the $\beta$ angle of the frustoconical section measured in degrees. The height (h) of the frustoconical section is equal to the radius ($R_{base}$) of the lower base (2') of the truncated cone: $R_{base}=h$ The height ($h_2$) of the inlet (3) for feeding organic solid, measured in meters from the junction of the cylindrical section with the frustoconical section is equal to the sine of angle $\beta$, measured in degrees: $h_2 = \sin\beta$.

According to another preferred embodiment, in which, in particular, the desired results are achieved, namely, the increase of the retention time of the solid fuel inside the gasification reactor (1), due to the modification of the flow pattern of organic solids with said geometry, it has been found that the effective bed height ($H_L$) has the following ratio with angle $\beta$ and the radius ($R_{cylinder}$) of the cylindrical section of the reactor: $H_L=R_{cylinder} \times \tan\beta$

According to another preferred embodiment, the ratio of the effective bed height (HL) and the diameter ($D_{base}$) of the base of the gasification reactor (1) is greater than the unit:

$$H_L/D_{base} >1$$

## DESCRIPTION OF A PREFERRED EMBODIMENT

The preferred embodiment that follows hereinbelow is provided for illustrative purposes and without limitation, to provide a better understanding of the invention.

For the purpose of the present invention, a comparative example is shown to evaluate the efficiency of the gasification reactor (1) process which is the object of the present invention compared to a cylindrical gasification reactor that has no bottom with an inverted frustoconical section.

The same starting material was used, in this case biomass. The same operating conditions in both reactors were maintained and the results obtained are illustrated in the following table:

| PERFORMANCE ANALYSIS OF GASIFIER OF FRUSTOCONICAL BASE CONFIGURATION | CYLINDRICAL REACTOR | REACTOR WITH CONICAL BASE ($\beta$=18°). Rc=85 / $R_{base}$=32.25 |
|---|---|---|
| Internal diameter of gasifier (mm) | 85 | 85 |
| Minimum fluidising speed (m/s) | 0.07 | 0.07 |
| Surface speed (m/s) | 0.2 | 0.2 |
| Mean particle size of bed ($\mu$m) | 410 | 410 |
| Supply biomass flow rate (kg/h) | 1.50 | 1.5 |
| Temperature of fluid bed (°C) | 800 | 800 |
| Gas volume flow produced ($m^3$N/h) | 3,011 | 3,013 |
| | | |
| Composition of gas (% Vol.) | | |

(continued)

| PERFORMANCE ANALYSIS OF GASIFIER OF FRUSTOCONICAL BASE CONFIGURATION | | CYLINDRICAL REACTOR | REACTOR WITH CONICAL BASE ($\beta$=18°). Rc=85 / $R_{base}$=32.25 |
|---|---|---|---|
| H2 | | 14.85 | 14.92 |
| | CO | 15.60 | 17.30 |
| | CH4 | 4.00 | 3.65 |
| | CO2 | 16.00 | 18.20 |
| | C2H4 | 1.00 | 1.02 |
| | C2H6 | 0.00 | 0.56 |
| | C2H2 | 0.00 | 0.00 |
| | O2 | 1.00 | 0.64 |
| | N2 | 47.55 | 43.71 |
| Heating value (kJ/m$^3$N) | | 5.645 | 6,085 |
| | | | |
| Solid residue (char on filters) (kg/h) | | 0.15 | 0.12 |
| Char composition (weight%) | | | |
| Volatiles | | 2.0% | 0,3% |
| Carbon Filo | | 30.7% | 15.4% |
| Ashes | | 69.3% | 84.6% |
| Heating value (kJ/kg) | | 9,838 | 4,935 |
| | | | |
| Condensed water vapour (kg/h) | | 0.11 | 0.11 |
| | | | |
| Condensed tars (kg/h) | | 0.02 | 0.01 |
| Tars concentration (mg/m$^3$N) | | 5,289 | 3,348 |

From the results shown above, it is worth noting that from the analysis conducted in the product stream, specifically the gas, a higher concentration of $CO_2$ was obtained when the process was carried out in the gasification reactor (1) object of the present invention, the result of increased combustion of carbon, and the extracted solid waste in a reduction of about 50% of fixed carbon and a 50% reduction in the condensed tars was observed.

It is an object of the present invention to provide a process for gasifying organic solid materials in a fluidised bed reactor (1) with a cylindrical body and a base (2) with an inverted frustoconical section, by means of a gas flow that entrains the particles of solid fluidised material, which comprises the following steps:

  a.-) supplying fuel through at least one inlet (3) for feeding organic solid,
  b.-) providing a catalytic agent or mixture thereof with inert material via an inlet (7) arranged at 60° from the inlet for feeding the organic solid from step a),
  c.-) introducing a fluidising agent through an inlet (6) located in the air box or plenum (12)
  d.-) distributing the fluidising agent through the lower base (2') of the inverted frustoconical section, wherein there is a distributor grid (10) provided with a plurality of outlet holes or tuyere-type diffusers (11), and
  e.-) producing the outflow of the product stream through the top of the reactor (1) transverse to the cylindrical section thereof by means of an outlet element (9).

Preferably, the organic solid is supplied through at least two inlets (3), radially distributed at 120° from each other.

Preferably, the aforementioned process further comprises the supply step by means of at least two inlets for the inerting agent (5), wherein the inerting agent is selected from nitrogen, steam or a mixture thereof.

Preferably, the fluidising agent is selected from air, oxygen, steam or a mixture thereof in the aforementioned process.

Preferably, the aforementioned process further comprises the step for recirculating the solids entrained from the bed through an inlet (4).

Preferably, the radius ($R_{base}$) of the lower base (2') of the gasification reactor in the aforementioned process is equal to the height (h) of the frustoconical section: $R_{base}$= h.

Preferably, the height (h2) of the inlet (3) for feeding organic solid, measured in meters from the junction of the cylindrical section with the frustoconical section in the aforementioned process is equal to the sine of angle β, measured in degrees: $h_2$= sinβ. The angle β is preferably inclined between 12-20 degrees. Preferably, the larger ($D_{cylinder}$) and smaller ($D_{base}$) diameters of the frustoconical section in the aforementioned process are equal to:

$$D_{cylinder}/D_{base} = 1+ \tangent \beta$$

Preferably, the bed volume occupied in the cylindrical section above the height ($h_2$) of the inlet (3) for feeding organic solid in the aforementioned process is equal to the volume occupied by the frustoconical section.

Preferably, the ratio between the effective bed height (HL) and the base diameter ($D_{cylinder}$) of the cylindrical section of the reactor (1) in the aforementioned process is greater than the unit:

$$HL/D_{cylinder}>1.$$

Additionally, the effective bed height (HL) has the following ratio with the inclined angle β of the frustoconical section and the radius ($R_{cylinder}$) of the cylindrical section:

$$HL= R_{cylinder} \times \tangent \beta$$

According to an important aspect, the present invention relates to a gasification reactor (1) for implementing the abovementioned process which is characterised by having a fluidised bed which is cylindrically configured having an inverted conical bottom (2) with a distributor grid (10) provided with a plurality of outlet holes or tuyere-type diffusers (11), located in the lower base (2') of the inverted frustoconical section.

According to another aspect, the aforementioned gasification reactor (1) comprises the following inlets for material:

- at least one inlet (3) for feeding organic solids,
- an inlet (4) for recirculating solids entrained from the bed,
- an inlet (7) for the catalyst and the inert material, situated at a height equal to or greater than the effective bed height (HL),
- at least two inlets (5) for the inerting agent, being four inlets in a preferred embodiment, wherein the inerting agent is selected from nitrogen, steam or a mixture thereof,
- an inlet (6) for fluidising agent, wherein the fluidising agent is selected from air, oxygen, steam or a mixture thereof.

According to another aspect, the aforementioned gasification reactor (1) comprises the following outlets for material:

- an outlet for agglomerates (8), and
- an outlet for product stream (9).

**Claims**

1. A process for gasification of organic solid materials in a fluidised bed reactor (1) by means of a circulating gas flow containing solid fluidised material particles, comprising:

    a.-) supplying fuel through at least one inlet (3) for feeding organic solid,
    b.-) providing a catalytic agent or mixture thereof with inert material through an inlet (7),
    c.-) introducing a fluidising agent through an inlet (6),

d.-) distributing the fluidising agent, and

e.-) producing the outflow of the product stream through the top of the reactor (1) transverse to a cylindrical section thereof by means of an outlet element (9),

**characterised in that** reactor comprises a body defined by a cylindrical body wherein said the at least one inlet (3) is located, an air box or plenum wherein inlet (6) is located, and a bottom with a frustoconical section interposed between cylindrical body and a air box or plenum, wherein the fluidising agent is distributed through frustoconical section, wherein there is a distributor grid (10) provided with a plurality of outlet holes or tuyere-type diffusers (11), being portion with a frustoconical section defined by an upper base, a lower base (2') and an angle β corresponding slope of frustoconical section with respect to a longitudinal axis of cylindrical body, the upper part of frustoconical section being the larger diameter of the truncated cone, which is equal to the diameter of the cylindrical body, wherein radius ($R_{base}$) of the lower base (2') of the reactor is equal to the height (h) of the frustoconical section and the height ($h_2$) of the inlet (3) for feeding organic solid, measured in meters, from the junction of the cylindrical body with the frustoconical section is equal to the sine of angle β measured in degrees.

2. Process according to claim 1, **characterised in that** it further comprises the step for supplying by means of at least two inlets (5) of the inerting agent, which is selected from nitrogen, steam or a combination thereof.

3. Process according to claim 1, **characterised in that** the fluidising agent is selected from air, oxygen, steam or a mixture thereof.

4. Process according to claim 1, **characterised in that** it further comprises the step for recirculating entrained solids from the bed through an inlet (4).

5. Process according to claim 1, **characterised in that** the volume occupied by the frustoconical section with respect to the total volume of the particle bed is equal in percentage to angle β of the frustoconical section measured in degrees.

6. Process according to the previous claim, **characterised in that** the angle β is inclined between 12-20 degrees.

7. Process according to any of the preceding claims, **characterised in that** the larger ($R_{cylinder}$) and smaller ($D_{base}$) diameters of the frustoconical section are equal to: $D_{cylinde}/D_{base}$ = 1 + tangent β.

8. Process according to any of the preceding claims, **characterised in that** the bed volume occupied in the cylindrical section above the height (h2) of the inlet (3) for feeding organic solid is equal to the volume occupied through the frustoconical section.

9. Gasification reactor for implementing the process according to claims 1 to 8, **characterised in that** the fluidised bed is cylindrically configured having a bottom (2) with an inverted frustoconical section, with a distributor grid (10) located in the lower base (2') of the inverted frustoconical section and provided with a plurality of tuyere-type diffusers (11), and the reactor comprises a body defined by a cylindrical body wherein said the at least one inlet (3) is located, an air box or plenum wherein inlet (6) is located, and a bottom with a frustoconical section interposed between cylindrical body and an air box or plenum, wherein the fluidising agent is distributed through frustoconical section, wherein there is a distributor grid (10) provided with a plurality of outlet holes or tuyere-type diffusers (11), being portion with a frustoconical section defined by an upper base, a lower base (2') and an angle β corresponding slope of frustoconical section with respect to a longitudinal axis of cylindrical body, the upper part of frustoconical section being the larger diameter of the truncated cone, which is equal to the diameter of the cylindrical body, wherein radius (Rbase) of the lower base (2') of the reactor is equal to the height (h) of the frustoconical section and the height (h2) of the inlet (3) for feeding organic solid, measured in meters, from the junction of the cylindrical body with the frustoconical section is equal to the sine of angle β measured in degrees.

10. Gasification reactor according to claim 9, **characterised in that** it comprises the following inlets for material:

- at least one inlet (3) for feeding organic solids,
- an inlet (4) for recirculating solids entrained from the bed,
- an inlet (7) for the catalyst or mixture of this with inert material, situated at a height equal to or greater than the effective bed height (HL),
- at least two inlets (5) for the inerting agent, wherein the inerting agent is selected from nitrogen, steam or a mixture thereof,
- an inlet (6) for fluidising agent, wherein the fluidising agent is selected from air, oxygen, steam or a mixture thereof.

11. Gasification reactor according to claim 9, **characterised in that** it comprises the following outlets for material:

- an outlet for agglomerates (8), and
- an outlet for product stream (9).

12. Gasification reactor according to claim 9, **characterised in that** the height ($h_2$) of the inlet (3) for feeding organic solid, measured in metres from the junction of the cylindrical section with the frustoconical section, is equal to the sine of angle $\beta$ measured in degrees: $h_2 = \sin\beta$.

13. Gasification reactor according to claim 9, **characterised in that** the angle $\beta$ is inclined between 12-20 degrees.

**Patentansprüche**

1. Verfahren zur Vergasung von organischen festen Materialien in einem Wirbelschichtreaktor (1) mittels eines zirkulierenden Gasstroms, der feste fluidisierte Materialteilchen enthält, umfassend:

a.-) Liefern von Brennstoff durch mindestens einen Einlass (3) zum Zuführen von organischem Feststoff,
b.-) Bereitstellen eines katalytischen Mittels oder einer Mischung davon mit inertem Material durch einen Einlass (7),
c.-) Einleiten eines Fluidisierungsmittels durch einen Einlass (6),
d.-) Verteilen des Fluidisierungsmittels, und
e.-) Erzeugen der Ausströmung des Produktstroms durch die Oberseite des Reaktors (1) quer zu einem zylindrischen Abschnitt davon mittels eines Auslasselements (9),

**dadurch gekennzeichnet, dass** der Reaktor einen Körper umfasst, der durch einen Zylinderkörper definiert ist, wobei sich der mindestens eine Einlass (3) befindet, einen Luftkasten oder eine Luftkammer, wobei sich der Einlass (6) befindet, und einen Boden mit einem kegelstumpfförmigen Abschnitt, der zwischen dem Zylinderkörper und einem Luftkasten oder einer Luftkammer angeordnet ist, wobei das Fluidisierungsmittel durch den kegelstumpfförmigen Abschnitt verteilt wird, wobei ein Verteilergitter (10) mit einer Mehrzahl von Auslasslöchern oder düsenartigen Diffusoren (11) versehen ist,
die ein Teil mit einem kegelförmigen Abschnitt sind, der durch eine obere Basis definiert ist, eine untere Basis (2') und einen Winkel $\beta$, der einer Steigung des kegelstumpfförmigen Abschnitts in Bezug auf eine Längsachse des Zylinderkörpers entspricht, wobei der obere Teil des kegelstumpfförmigen Abschnitts der größere Durchmesser des Kegelstumpfes ist, der gleich dem Durchmesser des Zylinderkörpers ist,
wobei der Radius ($R_{Basis}$) der unteren Basis (2') des Reaktors gleich der Höhe (h) des kegelstumpfförmigen Abschnitts und der Höhe ($h_2$) des Einlasses (3) zum Zuführen von organischem Feststoff ist, die in Metern gemessen wird, von der Verbindungsstelle des Zylinderkörpers mit dem kegelstumpfförmigen Abschnitt gleich dem Sinus des Winkels $\beta$ ist, der in Grad gemessen wird.

2. Verfahren nach Anspruch 1, **dadurch gekennzeichnet, dass** es ferner den Schritt des Lieferns mittels mindestens zwei Einlässen (5) des Inertisierungsmittels umfasst, das ausgewählt ist aus Stickstoff, Dampf oder einer Kombination davon.

3. Verfahren nach Anspruch 1, **dadurch gekennzeichnet, dass** das Fluidisierungsmittel ausgewählt ist aus Luft, Sauerstoff, Dampf oder einer Mischung davon.

4. Verfahren nach Anspruch 1, **dadurch gekennzeichnet, dass** es ferner den Schritt des Rezirkulierens von eingeschlossenen Feststoffen aus dem Wirbelbett durch einen Einlass (4) umfasst.

5. Verfahren nach Anspruch 1, **dadurch gekennzeichnet, dass** das Volumen, das von dem kegelstumpfförmigen Abschnitt ausgefüllt wird, in Bezug auf das Gesamtvolumen des Teilchenbettes den gleichen Prozentanteil wie der Winkel $\beta$ des kegelstumpfförmigen Abschnitt aufweist, der in Grad gemessen wird.

6. Verfahren nach dem vorhergehenden Anspruch, **dadurch gekennzeichnet, dass** der Winkel $\beta$ zwischen 12-20 Grad geneigt ist.

7. Verfahren nach einem der vorhergehenden Ansprüche, **dadurch gekennzeichnet, dass** der größere ($D_{zylinder}$) und der kleinere ($D_{Basis}$) Durchmesser des kegelstumpfförmigen Abschnitts wie folgt sind: $D_{zylinder}/D_{Basis}$ = 1 + Tangente $\beta$.

8. Verfahren nach einem der vorhergehenden Ansprüche, **dadurch gekennzeichnet, dass** das Wirbelbettvolumen, das im zylindrischen Abschnitt oberhalb der Höhe (h2) des Einlasses (3) zum Zuführen von organischem Feststoff ausgefüllt wird, gleich dem Volumen ist, das durch den kegelstumpfförmigen Abschnitt ausgefüllt wird.

9. Vergasungsreaktor zum Implementieren des Verfahrens nach Anspruch 1 bis 8, **dadurch gekennzeichnet, dass** Wirbelbett zylindrisch konfiguriert ist und einen Boden (2) mit einem umgekehrten kegelstumpfförmigen Abschnitt aufweist, mit einem Verteilergitter (10), das sich in der unteren Basis (2') des umgekehrten kegelstumpfförmigen Abschnitts befindet und mit einer Mehrzahl von düsenartigen Diffusoren (11) versehen ist, und wobei der Reaktor einen Körper umfasst, der durch einen Zylinderkörper definiert ist, wobei sich der mindestens eine Einlass (3) befindet, einen Luftkasten oder eine Luftkammer, wobei sich der Einlass (6) befindet, und einen Boden mit einem kegelstumpfförmigen Abschnitt, der zwischen dem Zylinderkörper und einem Luftkasten oder einer Luftkammer angeordnet ist, wobei das Fluidisierungsmittel durch den kegelstumpfförmigen Abschnitt verteilt wird, wobei ein Verteilergitter (10) mit einer Mehrzahl von Auslasslöchern oder düsenartigen Diffusoren (11) versehen ist, die ein Teil mit einem kegelförmigen Abschnitt sind, der durch eine obere Basis definiert ist, eine untere Basis (2') und einen Winkel $\beta$, der einer Steigung des kegelstumpfförmigen Abschnitts in Bezug auf eine Längsachse des Zylinderkörpers entspricht, wobei der obere Teil des kegelstumpfförmigen Abschnitts der größere Durchmesser des Kegelstumpfes ist, der gleich dem Durchmesser des Zylinderkörpers ist, wobei der Radius (RBasis) der unteren Basis (2') des Reaktors gleich der Höhe (h) des kegelstumpfförmigen Abschnitts und der Höhe (h2) des Einlasses (3) zum Zuführen von organischem Feststoff ist, die in Metern gemessen wird, von der Verbindungsstelle des Zylinderkörpers mit dem kegelstumpfförmigen Abschnitt gleich dem Sinus des Winkels $\beta$ ist, der in Grad gemessen wird.

10. Vergasungsreaktor nach Anspruch 9, **dadurch gekennzeichnet, dass** er die folgenden Einlässe für Material umfasst:

   - mindestens einen Einlass (3) zum Zuführen von organischen Feststoffen,
   - einen Einlass (4) zum Rezirkulieren von eingeschlossenen Feststoffen aus dem Wirbelbett,
   - einen Einlass (7) für den Katalysator oder die Mischung dieses mit inertem Material, der sich auf einer Höhe befindet, die gleich oder größer als die effektive Wirbelbetthöhe (HL) ist,
   - mindestens zwei Einlässe (5) für das Inertisierungsmittel, wobei das Inertisierungsmittel ausgewählt ist aus Stickstoff, Dampf oder einer Mischung davon,
   - einen Einlass (6) für Fluidisierungsmittel, wobei das Fluidisierungsmittel ausgewählt ist aus Luft, Sauerstoff, Dampf oder einer Mischung davon.

11. Vergasungsreaktor nach Anspruch 9, **dadurch gekennzeichnet, dass** er die folgenden Auslässe für Material umfasst:

   - einen Auslass für Agglomerate (8), und
   - einen Auslass für Produktstrom (9).

12. Vergasungsreaktor nach Anspruch 9, **dadurch gekennzeichnet, dass** die Höhe ($h_2$) des Einlasses (3) zum Zuführen von organischem Feststoff, die in Metern von der Verbindungsstelle des zylindrischen Abschnitts mit dem kegelstumpfförmigen Abschnitt gemessen wird, gleich dem Sinus von Winkel $\beta$ ist, der in Grad gemessen wird: $h_2 = \sin\beta$.

13. Vergasungsreaktor nach Anspruch 9, **dadurch gekennzeichnet, dass** der Winkel $\beta$ zwischen 12-20 Grad geneigt ist.

**Revendications**

1. Procédé pour la gazéification de matériaux solides organiques dans un réacteur à lit fluidisé (1) au moyen d'un flux gazeux circulant contenant des particules solides de matériau fluidisé, comprenant :

a.-) l'approvisionnement de carburant à travers au moins une entrée (3) pour alimenter le solide organique,
b.-) la fourniture d'un agent catalytique ou mélange de celui-ci avec un matériau inerte à travers une entrée (7),
c.-) l'introduction d'un agent fluidisant à travers une entrée (6),
d.-) la répartition de l'agent fluidisant, et
e.-) la production de la sortie de l'écoulement du produit à travers la partie supérieure du réacteur (1) transversalement par rapport à une section cylindrique de celui-ci au moyen d'un élément de sortie (9),

**caractérisé en ce que** le réacteur comprend un corps défini par un corps cylindrique dans lequel ladite au moins une sortie (3) est située, un caisson ou plénum d'air dans lequel l'entrée (6) est située, et une partie inférieure avec une section tronconique interposée entre le corps cylindrique et un caisson ou plénum d'air, dans lequel l'agent fluidisant est réparti à travers la section tronconique, dans lequel il y a une grille de répartition (10) pourvue d'une pluralité d'orifices de sortie ou diffuseurs du type tuyère (11),
faisant partie d'une section tronconique définie par une base supérieure, une base inférieure (2') et une inclinaison correspondante à angle $\beta$ en section tronconique par rapport à un axe longitudinal d'un corps cylindrique, la partie supérieure de section tronconique étant le plus large diamètre du cône tronqué, qui est égale au diamètre du corps cylindrique,
dans lequel le rayon ($R_{base}$) de la base inférieure (2') du réacteur est égal à la hauteur (h) de la section tronconique et la hauteur ($h_2$) de l'entrée (3) pour alimenter le solide organique, mesurée en mètres, depuis la jonction du corps cylindrique avec la section tronconique est égale au sinus de l'angle $\beta$ mesuré en degrés.

2. Procédé selon la revendication 1, **caractérisé en ce qu'**il comprend en outre l'étape pour approvisionner au moyen d'au moins deux entrées (5) l'agent inerte, qui est choisi parmi l'azote, la vapeur ou une combinaison de ces derniers.

3. Procédé selon la revendication 1, **caractérisé en ce que** l'agent fluidisant est choisi parmi l'air, l'oxygène, la vapeur ou un mélange de ces derniers.

4. Procédé selon la revendication 1, **caractérisé en ce qu'**il comprend en outre l'étape pour faire recirculer les solides entraînés à partir du lit à travers une entrée (4).

5. Procédé selon la revendication 1, **caractérisé en ce que** le volume occupé par la section tronconique par rapport au volume total du lit de particules est égal en pourcentage à l'angle $\beta$ de la section tronconique mesuré en degrés.

6. Procédé selon la revendication précédente, **caractérisé en ce que** l'angle $\beta$ est incliné entre 12-20 degrés.

7. Procédé selon l'une quelconque des revendications précédentes, **caractérisé en ce que** le plus large ($D_{cylindre}$) et le plus petit ($D_{base}$) diamètres de la section tronconique sont égaux à : $D_{cylindre}/D_{base} = 1 + tangente \beta$.

8. Procédé selon l'une quelconque des revendications précédentes, **caractérisé en ce que** le volume du lit occupé dans la section cylindrique au-dessus de la hauteur (h2) de l'entrée (3) pour alimenter le solide organique est égal au volume occupé à travers la section tronconique.

9. Réacteur de gazéification pour mettre en oeuvre le procédé selon les revendications 1 à 8, **caractérisé en ce que** le lit fluidisé est cylindriquement configuré ayant une partie inférieure (2) avec une section tronconique inversée, avec une grille de répartition (10) située dans la base inférieure (2') de la section tronconique inversée et pourvue d'une pluralité de diffuseurs du type tuyère (11), et le réacteur comprend un corps défini par un corps cylindrique dans lequel ladite au moins une entrée (3) est située, un caisson ou plénum d'air dans lequel l'entrée (6) est située, et une partie inférieure avec une section tronconique interposée entre le corps cylindrique et un caisson ou plénum d'air, dans lequel l'agent fluidisant est réparti à travers la section tronconique, dans lequel il y a une grille de répartition (10) pourvue d'une pluralité d'orifices de sortie ou diffuseurs du type tuyère (11), faisant partie d'une section tronconique définie par une base supérieure, une base inférieure (2') et une inclinaison correspondante à angle $\beta$ en section tronconique par rapport à un axe longitudinal d'un corps cylindrique, la partie supérieure de section tronconique étant le plus large diamètre du cône tronqué, qui est égale au diamètre du corps cylindrique, dans lequel le rayon (Rbase) de la base inférieure (2') du réacteur est égal à la hauteur (h) de la section tronconique et la hauteur (h2) de l'entrée (3) pour alimenter le solide organique, mesurée en mètres, depuis la jonction du corps cylindrique avec la section tronconique est égale au sinus de l'angle $\beta$ mesuré en degrés.

10. Réacteur de gazéification selon la revendication 9, **caractérisé en ce qu'**il comprend les entrées suivantes pour le matériau :

- au moins une entrée (3) pour alimenter les solides organiques,
- une entrée (4) pour faire recirculer les solides entraînés depuis le lit,
- une entrée (7) pour le catalyseur ou mélange de celui-ci avec le matériau inerte, située à une hauteur égale à ou supérieure à la hauteur du lit (HL) effective,
- au moins deux entrées (5) pour l'agent inerte, dans lequel l'agent inerte est choisi parmi l'azote, la vapeur ou un mélange de ces derniers,
- une entrée (6) pour l'agent fluidisant, dans lequel l'agent fluidisant est choisi parmi l'air, l'oxygène, la vapeur ou un mélange de ces derniers.

**11.** Réacteur de gazéification selon la revendication 9, **caractérisé en ce qu'**il comprend les sorties suivantes pour le matériau :

- une sortie pour les agglomérats (8), et
- une sortie pour l'écoulement du produit (9).

**12.** Réacteur de gazéification selon la revendication 9, **caractérisé en ce que** la hauteur ($h_2$) de l'entrée (3) pour alimenter le solide organique, mesurée en mètres depuis la jonction de la section cylindrique avec la section tronconique, est égale au sinus de l'angle $\beta$ mesuré en degrés : $h_2 = \sin\beta$.

**13.** Réacteur de gazéification selon la revendication 9, **caractérisé en ce que** l'angle $\beta$ est incliné entre 12-20 degrés.

EP 3 050 941 B1

# Fig. 1

14

Fig. 2

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 19548324
- DE 2751911
- EP 0889943 A
- EP 1286113 A
- EP 0433547 A
- EP 1432779 A
- US 20100040510 A1